# EUROPEAN PATENT APPLICATION

(11) **EP 3 056 389 A1**
(43) Date of publication of application: **17.08.2016**
(21) Application number: 15154753.6
(22) Date of filing: 11.02.2015
(51) Int. Cl.: B60R 13/10, G09F 7/18

(54) **Number plate holder**

(71) Applicant: E.CO. S.r.l., 10043 Orbassano (IT)
(72) Inventor: Rettagliati, Daniele, 10043 Orbassano (IT)
(74) Representative: Bosia, Alessandra

(57) **Abstract**

There is disclosed a number plate holder (1) suitable to be coupled to a number plate (2) comprising: a perimetric rim (3) which is in relief and is formed by a top edge (30), a bottom edge (31) and two lateral edges (32, 33); a central plate portion (4) comprising a first side adapted to accommodate the number plate (2) and a second side, opposite to the first side, adapted to be coupled to a vehicle; a stick element (8), which is coupled in use to the number plate holder (1), characterised in that the stick element (8) is coupled in use to the bottom edge (31) of the perimetric rim (3) on the same side as the first side of the central plate portion (4)

## Description

The present invention relates to a number plate holder suitable to be coupled to a number plate.

Number plate holders are used in the automotive industry to mount different kinds of number plates on vehicles of different brands. The number plate holder should allow to firmly fix the number plate to the vehicle and prevent noise deriving from vibrations when the vehicle is in motion.

Some number plate holders provide portions of the holder, which are adapted to display advertising signs, such as for example the name of the car dealer.

Italian utility model No. 00241895 discloses a number plate holder including a lower portion which is integral with the number plate holder, where advertising signs can be silk-screen printed.

It is clear that, since the lower portion is part of the number plate holder, it cannot be replaced if the advertising sign is worn and is no longer visible or if the user wishes to change the advertising sign.

EP1004478 also discloses a number plate holder having a lower band which can provide advertisement notices. This band may be integral with the number plate holder or it may be detachable and coupled to the number plate holder by means of springs which can be either integral with the band or separate. These springs clamp a thin perimetric kerb of the number plate holder. This kind of number plate holder therefore has the drawback that the band detaches easily from the perimetric kerb and is aesthetically unpleasant.

EP0706913 discloses a number plate holder comprising a support and a dismountable frame, which holds the number plate in place on the support. The bottom edge of the frame, which is detachable from the rest of frame and is adapted to support the number plate in place, is fastened to the rest of the frame by fixed joints and is fastened to the rest of the frame and to the support by rivets (or the like) which pass through aligned holes obtained on the support, on the rest of the frame and on the bottom edge of the frame. The bottom edge of the frame may bear a silk-screen printed advertisement sign. This arrangement implies that, if the advertisement sign on the bottom edge must be replaced, the whole number plate holder must be disassembled and several fastening means must be used to reassemble the number plate holder.

It is an object of the present invention to provide a number plate holder which overcomes at least one of the drawbacks disclosed above in a simple and cost-effective manner.

This object is achieved by the present invention as it relates to a number plate holder as defined in claim 1.

For a better understanding of the present invention a preferred embodiment is disclosed hereinafter by way of mere non-limitative example with reference to the accompanying drawings, in which:
- Figure 1 is a perspective view of a number plate holder according to the present invention, and
- Figure 2 is a front view of an assembly comprising the number plate holder of Figure 1 and a number plate.

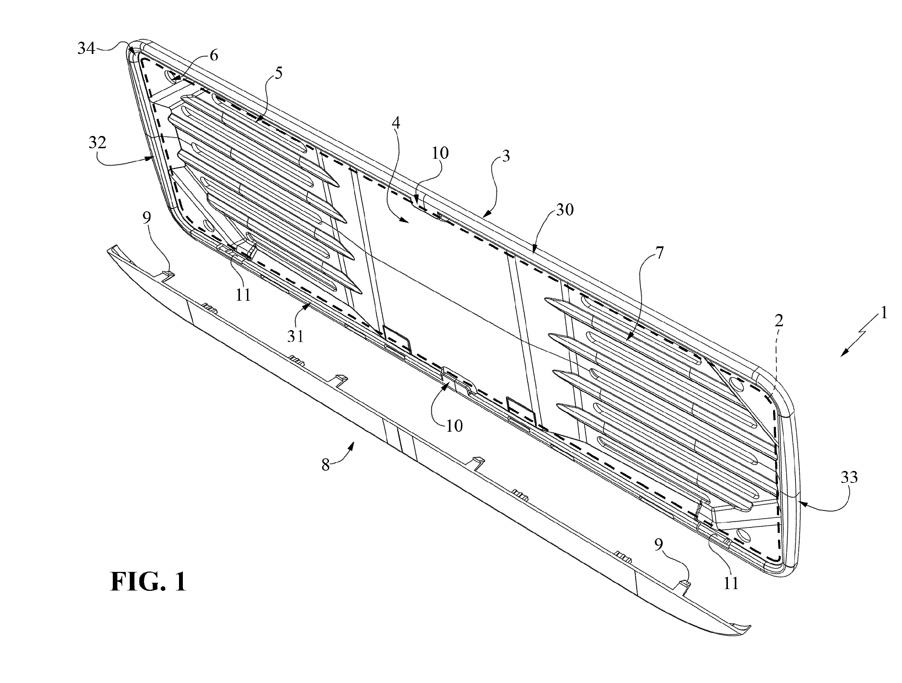

With reference to Figure 1, numeral 1 indicates a number plate holder 1 suitable to be coupled to a number plate 2, which comprises a perimetric rim 3, a central plate portion 4 and stick element 8.

Perimetric rim 3 is in relief and is formed by a top edge 30, a bottom edge 31 and two lateral edges 32, 33.

Central plate portion 4 comprises a first side adapted to accommodate number plate 2 and a second side, opposite to the first side, adapted to be coupled to a vehicle. Once number plate 2 is accommodated on the central plate portion 4, perimetric rim 3 frames number plate 2.

Stick element 8 is coupleable to number plate holder 1.

Advantageously, stick element 8 is coupled in use to bottom edge 31 of perimetric rim 3 on the same side as the first side of central plate portion 4.

Stick element 8 preferably overlaps at least partially bottom edge 31 of perimetric rim 3, more preferably stick element 8 completely overlaps bottom edge 31 of perimetric rim 3.

Number plate holder 1 is preferably made of plastic.

Central plate portion 4 comprises slots 5 for fixing number plate holder 1 to the vehicle. Slots 5 are configured so as to adapt to any kind of vehicle brand.

Central plate portion 4 also preferably comprises holes 6 for fixing number plate 2 to number plate holder 1. In the case at issue, holes 6 are in the number of four and are placed at the four corners of central plate portion 4.

Central plate portion 4 further preferably comprises reinforcement ribs 7, which provide increased stiffness and resistance to number plate holder 1.

Two fins 10 preferably protrude respectively from top edge 30 and bottom edge 31 of perimetric rim 3 so as to hold number plate 2 on central plate portion 4.

Stick element 8 is coupled in use to bottom edge 31 of perimetric rim 3 by means of coupling means 9, which are preferably snap elements. More preferably, the snap elements comprise at least one tooth (four in Figure 1), which is carried by stick element 8 and is adapted to couple with a least one slit 11 (four in Figure 1) obtained in bottom edge 31 of perimetric rim 3. The stick element 8 is preferably released from the bottom edge 31 of the perimetric rim 3 by breaking the at least one tooth. Once the stick element 8 is released, it must therefore be replaced with a new stick element 8.

Top edge 30, bottom edge 31 and two lateral edges 32, 33 of perimetric rim 3 are preferably joined by rounded corners 34.

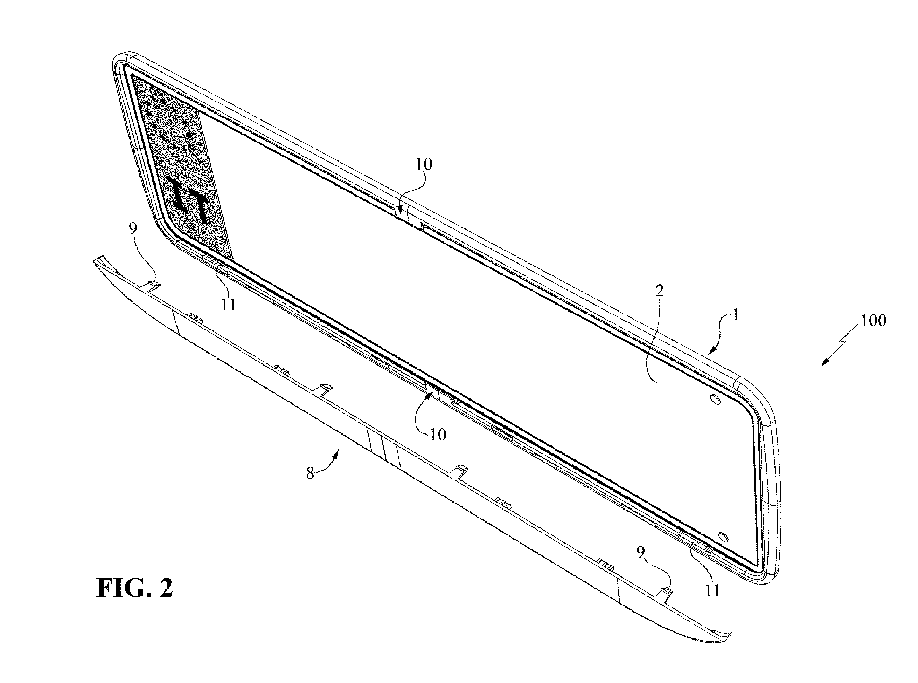

In Figure 2, numeral 100 indicates an assembly comprising number plate holder 1 and a number plate 2 connected to number plate holder 1 by means of buttons.

In use, number plate holder 1 is fastened to a vehicle by appropriate fastening means which pass through slots 5. Appropriate fastening means are for example screws. Number plate 2 is slid sideways on central plate portion 4 so that fins 10 hold number plate 2 against central plate portion 4. Number plate 2 is then fixed to number plate holder 1 by means of four buttons which pass through four holes 6. Finally, stick element 8 is frontally coupled to bottom edge 31 of perimetric rim 3 by means of four teeth 9 which are carried by stick element 8 and engage four slits 11 obtained in bottom edge 31 of perimetric rim 3.

From an analysis of the features of number plate holder 1 according to the present invention, the advantages it allows to obtain are apparent.

In particular, in virtue of the fact that stick element 8 is coupled in use to bottom edge 31 of perimetric rim 3 on the same side as the first side of central plate portion 4, stick element 8 itself can be easily and rapidly attached or detached from bottom edge 31 of perimetric rim 3 without having to detach number plate 2 from number plate holder 1 and disassemble number plate holder 1 from the vehicle to which it has been attached. This allows to replace stick element 8 with a new stick element 8 as many times as the user desires, allowing to display several different advertisement signs.

Further, the fact that number plate holder 1 is made of plastic, makes the same resistant, flexible and cost-effective.

Further, in virtue of the presence of fins 10 protruding respectively from top edge 30 and bottom edge 31 of perimetric rim 3, number plate 2 can be conveniently slid sideways and placed on central plate portion 4 of number plate holder 1. Fins 10 avoid the number plate vibrating when the vehicle is in motion, thus preventing disturbing noises.

In virtue of the fact that coupling means 9 are snap elements, the coupling of stick element 8 to bottom edge 31 of perimetric rim 3 occurs easily and rapidly.

Finally, it is clear that modifications and variants may be made to number plate holder 1 which do not depart from the scope of the claims.

## Claims

1. A number plate holder (1) suitable to be coupled to a number plate (2) comprising:
- a perimetric rim (3) which is in relief and is formed by a top edge (30), a bottom edge (31) and two lateral edges (32, 33);
- a central plate portion (4) comprising a first side adapted to accommodate the number plate (2) and a second side, opposite to the first side, adapted to be coupled to a vehicle;
- a stick element (8), which is coupleable to the number plate holder (1),
**characterised in that** the stick element (8) is coupled in use to the bottom edge (31) of the perimetric rim (3) on the same side as the first side of the central plate portion (4).

2. The number plate holder (1) according to claim 1, wherein the stick element (8) overlaps at least partially the bottom edge (31) of the perimetric rim (3).

3. The number plate holder (1) according to claim 2, wherein the stick element (8) completely overlaps the bottom edge (31) of the perimetric rim (3).

4. The number plate holder (1) according to any of the preceding claims, wherein the number plate holder (1) is made of plastic.

5. The number plate holder (1) according to any of the preceding claims, wherein the central plate portion (4) comprises slots (5) for fixing the number plate holder (1) to the vehicle.

6. The number plate holder (1) according to any of the preceding claims, wherein the central plate portion (4) comprises holes (6) for fixing the number plate (2) to the number plate holder (1).

7. The number plate holder (1) according to any of the preceding claims, wherein the central plate portion (4) comprises reinforcement ribs (7).

8. The number plate holder (1) according to any of the preceding claims, also comprising at least two fins (10) protruding respectively from the top edge (30) and bottom edge (31) of the perimetric rim (3) adapted to hold the number plate (2) on the central plate portion (4).

9. The number plate holder (1) according to any of the preceding claims, wherein the stick element (8) is coupled in use to the bottom edge (31) of the perimetric rim (3) by means of coupling means (9).

10. The number plate holder (1) according to claim 9, wherein the coupling means (9) are snap elements.

11. The number plate holder (1) according to claim 10, wherein the snap elements comprise at least one tooth carried by the stick element (8) and adapted to couple with at least one slit (11) obtained in the bottom edge (31) of the perimetric rim (3).

12. The number plate holder (1) according to claim 11, wherein the stick element (8) can be released from the bottom edge (31) of the perimetric rim (3) by breaking the at least one tooth.

13. The number plate holder (1) according to any of the preceding claims, wherein the top edge (30), the bottom edge (31) and the two lateral edges (32, 33) of the perimetric rim (3) are joined by rounded corners (34).

14. An assembly (100) comprising:
- a number plate holder (1) according to any of the preceding claims;
- a number plate (2) connected to the number plate holder (1) by means of buttons.
